(19) **Europäisches Patentamt** — **European Patent Office** — **Office européen des brevets**

(11) **EP 4 584 051 B1**

(12) **FASCICULE DE BREVET EUROPEEN**

(45) Date de publication et mention de la délivrance du brevet:
**18.02.2026 Bulletin 2026/08**

(21) Numéro de dépôt: **23777009.4**

(22) Date de dépôt: **05.09.2023**

(51) Classification Internationale des Brevets (IPC):
**B25J 9/00** *(2006.01)* **B62D 57/032** *(2006.01)*

(52) Classification Coopérative des Brevets (CPC):
**B25J 9/0006; B62D 57/032**

(86) Numéro de dépôt international:
**PCT/FR2023/051337**

(87) Numéro de publication internationale:
**WO 2024/052618 (14.03.2024 Gazette 2024/11)**

(54) **PROCEDE DE MISE EN MOUVEMENT STABILISEE D'UN EXOSQUELETTE BIPEDE**

VERFAHREN ZUR STABILISIERUNG DER BEWEGUNG EINES ZWEIBEINIGEN EXOSKELETTS

METHOD FOR STABILIZED MOVEMENT OF A BIPEDAL EXOSKELETON

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **06.09.2022 FR 2208927**

(43) Date de publication de la demande:
**16.07.2025 Bulletin 2025/29**

(73) Titulaire: **Wandercraft**
**75004 Paris (FR)**

(72) Inventeurs:
• **BRUNET, Maxime**
**75004 Paris (FR)**
• **PETRIAUX, Marine**
**75004 Paris (FR)**

(74) Mandataire: **Regimbeau**
**20, rue de Chazelles**
**75847 Paris Cedex 17 (FR)**

(56) Documents cités:
**CN-A- 114 700 948 FR-A1- 3 113 829**
**FR-A1- 3 117 393**

• **HUA YUXIANG ET AL: "Assistance Control of Human-Exoskeleton Integrated System for Balance Recovery Augmentation in Sagittal Plane", IEEE TRANSACTIONS ON INDUSTRIAL ELECTRONICS, IEEE SERVICE CENTER, PISCATAWAY, NJ, USA, vol. 69, no. 1, 14 January 2021 (2021-01-14), pages 528 - 538, XP011881306, ISSN: 0278-0046, [retrieved on 20211001], DOI: 10.1109/TIE.2021.3050363**
• **QIMING CHEN ET AL: "Dynamic Balance Gait for Walking Assistance Exoskeleton", APPLIED BIONICS AND BIOMECHANICS, vol. 2018, 2 July 2018 (2018-07-02), Cambridge, pages 1 - 10, XP055517094, ISSN: 1176-2322, DOI: 10.1155/2018/7847014**

## Description

## DOMAINE DE L'INVENTION

La présente invention concerne le domaine des robots de type exosquelette. Plus précisément, elle concerne un procédé de mise en mouvement stable d'un exosquelette.

## ETAT DE LA TECHNIQUE

Récemment, sont apparus pour les personnes avec des problèmes de mobilité importants, comme les paraplégiques, des dispositifs de marche assistée appelés exosquelettes, qui sont des dispositifs robotisés externes que l'opérateur (l'utilisateur humain) vient « enfiler » grâce à un système d'attaches qui lie les mouvements de l'exosquelette avec ses propres mouvements. Les exosquelettes de membres inférieurs disposent de plusieurs articulations, généralement au moins au niveau des genoux et des hanches, pour reproduire le mouvement de marche. Des actionneurs permettent de mouvoir ces articulations, qui à leur tour font se mouvoir l'opérateur. Un système d'interface permet à l'opérateur et/ou un physiothérapeute de donner des ordres à l'exosquelette, et un système de commande transforme ces ordres en commande pour les actionneurs. Des capteurs viennent généralement compléter le dispositif.

Ces exosquelettes constituent une avancée par rapport aux fauteuils roulants, car ils permettent aux opérateurs de se remettre debout et de marcher. Par ailleurs, les exosquelettes ne sont plus limités par les roues et peuvent théoriquement évoluer dans la majorité des environnements non plats : les roues, au contraire des jambes, ne permettent pas de franchir des obstacles importants comme des marches, escaliers, obstacles d'une hauteur trop importante, etc.

En général, la rééducation s'effectue grâce au savoir-faire des physiothérapeutes. Diverses activités sont pratiquées, pour remuscler les membres mais surtout pour réhabituer le cerveau à donner des signaux électriques correspondant à des ordres cohérents.

Dans ce contexte, l'exosquelette peut être utilisé pour guider les membres des patients afin de leur faire suivre une trajectoire prédéterminée au cours de laquelle le patient coopère avec les actionneurs de l'exosquelette et fournit une partie de l'effort mécanique permettant d'entraîner des fonctions corporelles perdues comme le décrit par exemple la demande internationale WO 2022/053761 A1. Le degré de partage de l'effort peut être réglé par le physiothérapeute, en fonction des capacités du patient et du niveau d'entraînement souhaité.

Cependant, Un ralentissement ou une accélération imprévue peut provoquer une chute du système. Les patients arrivent difficilement à faire le mouvement à vitesse nominale, et le thérapeute doit alors tenir l'exosquelette pour l'empêcher de tomber. En effet, à la vitesse nominale, l'exosquelette est en équilibre à chaque instant. Or, lorsque la trajectoire du système est accélérée ou ralentie, un calcul de dynamique inverse révèle l'instabilité de l'exosquelette.

Cette limitation a pour conséquence d'empêcher d'ajuster librement et à chaque instant l'assistance de l'exosquelette pour récompenser les efforts du patient. De plus, dans le cas d'un ralentissement trop conséquent, le physiothérapeute doit fournir un effort excessif afin de maintenir l'exosquelette.

Une solution consiste à développer une méthodologie de replanification rapide d'une trajectoire, comme cela est par exemple décrit dans le document S. Caron and A. Kheddar, Multi-contact Walking Pattern Generation based on Model Preview Control of 3D COM Accelerations, Humanoids, pp. 550-557, 2016, Mexico. Il s'agit d'une approche flexible, capable de faire face à diverses conditions expérimentales et morphologies de patients.

Cependant, la méthodologie de replanification peut ne pas trouver une trajectoire d'équilibre pour certaines vitesses de l'exosquelette engendrées par le patient lorsqu'il fournit un effort. Ainsi, le physiothérapeute ne peut pas l'encourager le patient à fournir davantage d'efforts lors du mouvement pour se déplacer plus rapidement et avec moins d'hésitations.

Le document CN 114 700 948 A divulgue un autre procédé de mise en mouvement d'un exosquelette bipède utillisant un planificateur de trajectoire de référence et un contrôleur linéaire quadratique gaussien.

Un but de l'invention est d'assurer la stabilité de l'exosquelette tout en garantissant la liberté de mouvement au patient.

## EXPOSE DE L'INVENTION

À cet effet, on prévoit selon l'invention un procédé de mise en mouvement stabilisée d'un exosquelette bipède recevant un opérateur humain pour effectuer un pas au cours duquel une première jambe de l'exosquelette passe d'un premier point d'appui au sol à un deuxième point d'appui au sol, la première jambe n'étant pas en contact avec le sol entre le premier point d'appui et le deuxième point d'appui, et au cours duquel une deuxième jambe de l'exosquelette reste en contact avec le sol pendant le pas,

le procédé comprenant, à chaque itération d'une pluralité d'itérations mises en oeuvre au cours du pas, la réalisation des étapes suivantes par une unité de commande embarquée sur l'exosquelette :

- estimation d'une vitesse de la première jambe par un capteur de mouvement relié à l'unité de commande ;
- à partir de la vitesse estimée, détermination d'une consigne de vitesse de déplacement et d'une trajectoire du centre de masse de l'exosquelette,

la consigne de vitesse de déplacement et la trajectoire du centre de masse de l'exosquelette provenant d'une résolution d'un problème d'optimisation ayant pour objectif la minimisation d'un écart entre la consigne de vitesse de déplacement et la vitesse estimée et pour contrainte que la trajectoire garantisse l'équilibre de l'exosquelette jusqu'à ce que la première jambe atteigne le deuxième point d'appui au sol avec pour vitesse la consigne de vitesse de déplacement ;

- à partir de la consigne de vitesse de déplacement, détermination d'une première commande à appliquer à la première jambe pendant le pas ;
- à partir de la trajectoire déterminée, détermination d'une deuxième commande à appliquer à la deuxième jambe ; et
- actionnement de la première jambe selon la première commande et actionnement de la deuxième jambe selon la deuxième commande.

L'opérateur humain peut donc mettre en mouvement la première jambe, en position et en vitesse, pendant que la deuxième jambe reste au sol afin de stabiliser l'exosquelette sur son pied d'appui à chaque instant du pas. La première commande est déterminée de façon à ce que la consigne de vitesse de déplacement soit aussi proche que possible de la vitesse estimée, sans déstabiliser l'exosquelette, et la deuxième commande est déterminée de façon à ce que l'exosquelette puisse suivre la trajectoire du centre de masse prédéterminée.

De plus, une unité de commande embarquée sur l'exosquelette peut calculer la trajectoire stabilisante du centre de masse sur une durée suffisamment courte par rapport à une durée d'un pas afin qu'une boucle de contrôle de l'unité de commande puisse générer, quasiment en temps réel, une commande de l'exosquelette qui s'ajuste continuellement aux efforts du patient.

Le procédé permet de répondre à deux contraintes fortes, suivre au mieux la vitesse des mouvements du patient à chaque instant du pas et respecter les limites de stabilité de l'exosquelette.

Ainsi, l'invention permet d'utiliser l'exosquelette dans un but thérapeutique, plus particulièrement dans un contexte de rééducation des membres inférieurs du patient tout en permettant de garantir la stabilité de l'exosquelette pendant les phases de ralentissement ou d'accélération des mouvements du patient. Ainsi, le physiothérapeute n'a plus besoin de tenir l'exosquelette pour l'empêcher de tomber.

On peut prévoir que la pluralité d'itérations de sorte à déplacer l'exosquelette d'une position initiale à une position finale par une succession de pas.

On peut prévoir que l'écart est nul lorsqu'il est possible de déterminer une trajectoire du centre de masse de l'exosquelette garantissant l'équilibre de l'exosquelette jusqu'à ce que la première jambe atteigne le deuxième point d'appui au sol avec une consigne de vitesse de déplacement égale à la vitesse estimée.

On peut prévoir que la consigne de vitesse de déplacement est déterminée à partir de la vitesse estimée.

On peut prévoir que la détermination, au cours d'une itération, de la consigne de vitesse de déplacement est réalisée par dichotomie sur un intervalle compris entre la vitesse estimée et la consigne de vitesse de déplacement déterminée au cours de l'itération précédente.

On peut prévoir que la détermination de la deuxième commande comprend :

- une mesure de la position du centre de masse de l'exosquelette et calcul d'un écart par comparaison de la position mesurée avec la trajectoire ; et
- à partir de l'écart calculé, une génération d'une consigne de position et d'une consigne de vitesse d'une ou plusieurs articulations de la deuxième jambe.

On peut prévoir également que la génération de la consigne de position et de la consigne de vitesse de l'une ou chaque articulation de la deuxième jambe comprend la résolution d'un problème d'optimisation hiérarchique ayant pour objectif de priorité maximale le respect de la position et de la vitesse de la première jambe.

On peut prévoir que chaque itération de la pluralité d'itérations est répétée à une fréquence d'au moins 250 Hz, de préférence d'au moins 500 Hertz.

On prévoit également selon l'invention un exosquelette bipède comprenant une unité de commande, un capteur de mouvement et des actionneurs, configurés pour mettre en oeuvre le procédé selon l'invention.

On prévoit aussi selon l'invention un produit programme d'ordinateur comprenant des instructions qui, lorsque le programme est exécuté sur une unité de commande d'un tel exosquelette bipède, conduisent cet exosquelette à mettre en oeuvre le procédé selon l'invention.

On prévoit en outre selon l'invention un moyen de stockage lisible par un ordinateur, sur lequel est enregistré le produit programme d'ordinateur.

## DESCRIPTION DES FIGURES

Nous allons maintenant présenter un mode de réalisation de l'invention à titre d'exemple non-limitatif à l'appui des dessins sur lesquels :

- la figure 1 est un schéma d'un exosquelette dans lequel est mis en œuvre le procédé selon l'invention ;
- la figure 2 est un schéma d'une architecture pour une mise en œuvre du procédé selon l'invention ;

- la figure 3 est un algorigramme illustrant le procédé selon l'invention ;
- la figure 4 est un graphe présentant un résultat de simulation sans la mise en œuvre du procédé selon l'invention, dans lequel est illustré le taux de réussite correspondant au nombre de fois où l'exosquelette est resté à l'équilibre en fonction de la valeur d'une consigne de vitesse de déplacement de la première jambe par rapport à une vitesse nominale et la durée pendant laquelle la consigne de vitesse de déplacement est maintenue ;
- la figure 5 est un graphe présentant un résultat de simulation avec la mise en œuvre du procédé selon l'invention, dans lequel est illustré le taux de réussite correspondant au nombre de fois où l'exosquelette est resté à l'équilibre en fonction de la valeur d'une consigne de vitesse de déplacement de la première jambe par rapport à une vitesse nominale et la durée pendant laquelle la consigne de vitesse de déplacement est maintenue ; et
- la figure 6 est un graphe présentant une simulation, au cours du pas de l'exosquelette, d'une variation autour d'une vitesse nominale de l'exosquelette (en pontillés), l'ensemble des consignes de vitesses de déplacement de l'exosquelette garantissant son équilibre (en barres verticales) et l'évolution d'une consigne de vitesse de déplacement déterminée par la mise en œuvre du procédé selon l'invention par l'unité de commande (en trait plein).

## DESCRIPTION DETAILLE DE L'INVENTION

*Architecture*

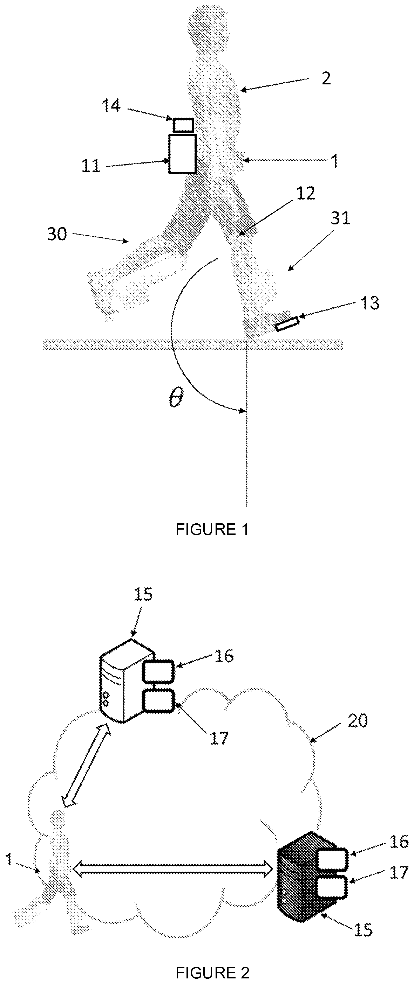

On a illustré en figure 1 et en figure 2 un exosquelette 1 bipède apte à mettre en œuvre le procédé de mise en mouvement stabilisée selon l'invention.

L'exosquelette 1 est un système mécanique articulé de type dispositif robotisé bipède, actionné et commandé, pourvu d'une première jambe 30 et d'une deuxième jambe 31, pouvant accueillir un opérateur 2 humain dont chacun des membres inférieurs est solidaire d'une jambe de l'exosquelette 1 (notamment grâce à des sangles). Il peut ainsi être un robot plus ou moins humanoïde. Par « marche », on entend ici la mise en mouvement du dispositif robotisé 1, qui se traduit en pratique par un appui alternatif sur les jambes, en position debout, de sorte à produire un déplacement. Un mouvement de l'exosquelette 1 est composé d'une séquence de pas, chaque pas voyant un pied de la première jambe 30 se décoller du sol puis se reposer.

Dans ce qui suite on désigne par première jambe 30 une jambe de vol, la jambe de vol étant celle qui passe d'un premier point d'appui au sol à un deuxième point d'appui au sol tout en n'étant pas en contact avec le sol entre le premier point d'appui et le deuxième point d'appui et par deuxième jambe 31 une jambe d'appui, la jambe d'appui étant celle qui reste en contact avec le sol pendant le pas.

Par exemple, en figure 1, l'opérateur 2 effectue un pas au cours duquel la jambe de vol 30 est décollée du sol pour basculer en avant tout en maintenant au sol la jambe d'appui 31. Dans le cas d'un mouvement de l'exosquelette comprenant une séquence de pas, la jambe de vol 30 et la jambe d'appui 31 sont alternées d'un pas à l'autre.

L'exosquelette 1 présente une pluralité de degrés de liberté, c'est-à-dire d'articulations déformables (généralement via une rotation) c'est-à-dire mobiles les unes par rapport aux autres, qui sont chacun soit « actionné », soit « non-actionné ».

Par exemple, l'exosquelette 1 peut comprendre douze degrés de liberté actionnés et six degrés de liberté non-actionnés.

Un degré de liberté actionné désigne une articulation pourvue d'un actionneur commandé par une unité de commande 11, c'est-à-dire que ce degré de liberté est contrôlé et que l'on peut agir dessus. Au contraire un degré de liberté non actionné désigne une articulation dépourvue d'actionneur, c'est-à-dire que ce degré de liberté suit sa propre dynamique et que l'unité de commande 11 n'a pas de contrôle direct dessus (mais a priori un contrôle indirect via les autres degrés de liberté actionnés).

Dans le présent cas, l'exosquelette 1 présente un niveau d'assistance variable, c'est-à-dire que l'opérateur 2 peut de par ses mouvements « actionner » de lui-même les degrés de liberté dans la mesure où le niveau d'assistance le permet, i.e. modifier de lui-même l'orientation d'une articulation, par exemple plier le genou. A ce titre, les actionneurs sont avantageusement également des capteurs, en ce qu'ils sont capables de faire remonter à l'unité de commande 11 leur position de sorte à pouvoir détecter l'actionnement « forcé » d'un degré de liberté par l'opérateur 2.

Des codeurs 12, montés sur chaque articulation de l'exosquelette 1, mesurent la position et la vitesse de chacune de ces articulations et permettent d'obtenir une vitesse mesurée de la jambe de vol 30, par exemple selon un mode de mise en oeuvre décrit dans la demande de brevet FR 3 113 829 A1.

L'unité de commande 11 désigne un équipement informatique, par exemple un processeur, embarqué sur l'exosquelette 1 adapté pour traiter des instructions et générer des commandes à destination des différents actionneurs. Ces derniers peuvent être électriques, hydrauliques, etc.

Cette unité de commande 11 peut également être connectée à un serveur distant 15 comprenant des moyens de traitement des données 16 et des moyens de stockage des données 17 afin d'échanger des informations soit de façon intermittente, soit de manière répétée au cours d'un pas de l'exosquelette 1.

L'unité de commande 11 est configurée pour mettre en oeuvre le procédé selon l'invention.

La présente demande ne sera limitée à aucune architecture d'exosquelette 1 bipède, et on prendra l'exemple tel que décrit dans les demandes WO 2015/140352 A1 et WO 2015/140353 A2.

Ainsi, de façon préférée et conformément à ces demandes, l'exosquelette 1 comprend sur chaque jambe une structure de pied comprenant un plan de support sur lequel un pied de la jambe d'appui 31 de la personne portant l'exosquelette peut venir en appui.

Ce plan de support est de forme sensiblement plane et présente, sur l'une de ses extrémités, un bord sensiblement courbé de sorte à ce que le plan de support constitue un degré de liberté non actionné. Il est également instrumenté, par des capteurs de force situés au niveau du plan de support. Les capteurs permettent en outre d'obtenir le torseur des efforts extérieurs appliqués par le sol sur le plan de support.

L'homme du métier saura toutefois adapter le présent procédé à toute autre architecture mécanique.

De façon connue, l'exosquelette peut être modélisé de façon simplifiée par un pendule inverse linéaire (« Linear Inverted Pendulum (LIP) model » selon la terminologie anglosaxonne). Avec ce modèle, l'accélération *c̈* du centre de masse est donnée par l'équation suivante :

$$\ddot{c} = \omega^2(c - p)$$

avec *ω* la pulsation en radian par seconde définie comme étant la racine du rapport entre l'accélération de la pesanteur et la composante verticale de la position du centre de masse c,
c la position du centre de masse en mètre, et
p la position du centre de pression, le centre de pression correspondant au barycentre des efforts de réaction du sol sur l'exosquelette.

Avec cette simplification, le procédé selon l'invention peut être exécuté de façon répétée sur l'unité de commande 11 embarquée dans l'exosquelette 1 au cours d'un pas.

*Procédé de mise en mouvement stabilisée de l'exosquelette 1 bipède recevant l'opérateur humain 2 pour effectuer un pas*

Le présent procédé vient de façon astucieuse dissocier au cours d'un pas la jambe de vol 30, mise en mouvement par l'opérateur 2 le long d'une trajectoire prédéfinie, de la jambe d'appui 31 de l'exosquelette 1 garantissant la stabilité de l'exosquelette au cours du pas.

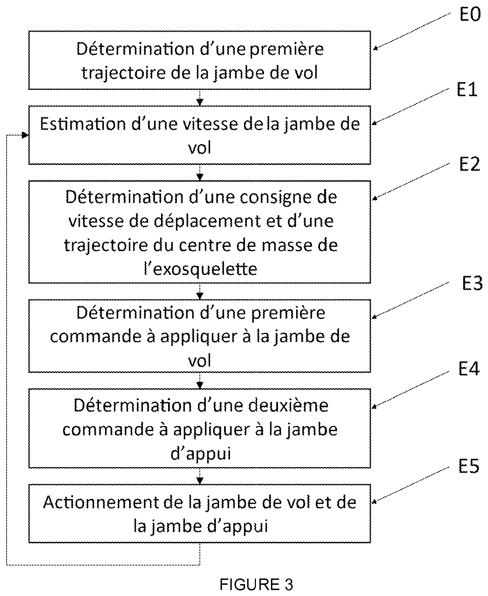

Un mode de mise en œuvre du procédé, illustré en figure 3, est réalisé selon les étapes suivantes.

Au cours d'une première étape E0, l'opérateur 2 effectue un pas au cours duquel une jambe de vol 30 de l'exosquelette passe d'un premier point d'appui au sol à un deuxième point d'appui au sol, la jambe de vol 30 n'étant pas en contact avec le sol entre le premier point d'appui et le deuxième point d'appui, et au cours duquel une jambe d'appui 31 de l'exosquelette reste en contact avec le sol pendant le pas.

Ainsi, au cours du pas, la jambe de vol 30 suit une première trajectoire déterminée par l'unité de commande 11 selon un mode de mise en œuvre décrit dans la demande de brevet FR 3 113 829 A1.

La trajectoire de la jambe de vol 30 est issue d'une trajectoire nominale stable pour les deux jambes de l'exosquelette 1.

A chaque itération d'une pluralité d'itérations mises en œuvre au cours du pas, l'unité de commande 11 embarquée sur l'exosquelette 1 réalise les étapes suivantes.

Au cours d'une étape E1, les codeurs 12 reliés à l'unité de commande 11 estiment une vitesse Ve de la jambe de vol 30.

Au cours d'une étape E2, l'unité de commande 11 détermine, à partir de la vitesse estimée Ve, une consigne de vitesse de déplacement Vd et d'une trajectoire du centre de masse c de l'exosquelette 1, la consigne de vitesse de déplacement Vd et la trajectoire du centre de masse c de l'exosquelette 1 provenant d'une résolution d'un problème d'optimisation ayant pour objectif la minimisation d'un écart entre la consigne de vitesse de déplacement Vd et la vitesse estimée Ve et pour contrainte que la trajectoire garantisse l'équilibre de l'exosquelette 1 jusqu'à ce que la jambe de vol 30 atteigne le deuxième point d'appui au sol avec pour vitesse la consigne de vitesse de déplacement Vd.

La trajectoire du centre de masse c est obtenue en calculant la trajectoire du centre de pression p de l'exosquelette 1. En effet, d'après l'équation du pendule inverse, pour une accélération donnée (correspondant par exemple au basculement du torse de l'opérateur 2 vers l'avant), le centre de masse c est en avance sur le centre de pression p de façon à ce qu'ils s'éloignent mutuellement. Ainsi, le centre de pression p peut être choisi comme variable de commande permettant de déplacer l'exosquelette 1 à la consigne de vitesse de déplacement Vd.

Les conditions devant être vérifiées par les trajectoires pour garantir l'équilibre de l'exosquelette 11 jusqu'à ce que la jambe de vol 30 atteigne le deuxième point d'appui au sol sont les suivantes :

- C1 : les trajectoires du centre de masse c et du centre de pression p vérifient l'équation $\ddot{c} = \omega^2(c - p)$, correspondant à une condition de déplacement de l'exosquelette 1 ;
- C2 : le centre de pression p est compris dans un polygone de sustentation, correspondant à une condition d'équilibre de l'exosquelette 1 au cours du mouvement,

  le polygone de sustentation étant défini comme l'enveloppe convexe de l'ensemble des points de contact de l'exosquelette 1 avec le sol ;

- C3 : le point de départ de la trajectoire du centre de masse c est identique à un point d'asservissement courant du centre de masse c,

le point d'asservissement étant déterminé par l'itération précédente au cours du pas ; et

- C4 : le point final de la trajectoire du centre de masse c est identique au point final de la trajectoire nominale de centre de masse c,

la trajectoire nominale de centre de masse c est déterminée à partir de la trajectoire nominale articulaire grâce à un calcul de cinématique (étape E0).

Asservir la jambe de vol 30 à une consigne de vitesse de déplacement Vd différente de la vitesse estimée Ve a pour conséquence d'entrainer l'opérateur 2 lorsqu'il réalise un pas à se déplacer plus rapidement ou plus lentement que ce qu'il désire, ce qui a pour effet d'assister l'opérateur 2 et donc de diminuer les effets de la rééducation. En effet, lorsque l'exosquelette assiste le mouvement, l'opérateur 2 n'est plus dans un cas où il fournit un effort mettant en mouvement la jambe de vol 30.

Ainsi, la consigne de déplacement est déterminée à partir de la vitesse estimée Ve et il est préférable que la consigne de vitesse de déplacement Vd de la jambe de vol 30 soit au plus proche de la vitesse estimée Ve de façon à minimiser les effets de la commande de l'exosquelette 1 sur la jambe de vol 30 pour ne pas compromettre l'effet de la rééducation.

Selon un mode de mise en œuvre, la consigne de vitesse de déplacement Vd et la trajectoire sont obtenues par l'exécution d'une optimisation « en-ligne », c'est à dire qui s'exécute à chaque itération de la pluralité d'itérations mises en œuvre au cours du pas, par exemple par un algorithme de type dichotomie sur une fonction de faisabilité de problèmes quadratiques (« Quadratic programming (QP) algorithm » selon la terminologie anglosaxonne), de la façon suivante.

Un problème d'optimisation à deux niveaux est formulé ci-dessous. L'objectif de niveau supérieur est la minimisation de l'écart entre la consigne de vitesse de déplacement Vd et la vitesse estimée Ve, la vitesse estimée Ve correspondant à la vitesse désirée par l'opérateur 2. La contrainte de niveau inférieur est l'existence d'une trajectoire de centre de masse c à la vitesse optimale de l'objectif de niveau supérieur et qui respecte les conditions C1 à C4.

Soient $x^0 = x(t)$, $x^f$ et $T^t$ les paramètres de l'optimisation correspondant respectivement au point d'asservissement courant du centre de masse c, au point final de la trajectoire nominale de centre de masse c et à un temps estimé inversement proportionnel à la vitesse estimée Ve, trouver $u^*$, une commande optimale du centre de masse c de l'exosquelette 1 et $T^*$ un temps inversement proportionnel à la vitesse optimale, correspondant à la consigne de vitesse de déplacement Vd la plus proche de la vitesse estimée Ve et minimisant ainsi l'écart, tels que

$$T^* = \operatorname*{argmin}_{T \in \tau(x^0, x^f)} |T - T^t|,$$

$$u^* = \operatorname*{argmin}_{u \in \Omega(x^0, x^f, T^*)} \int_0^{T^*} u^2 dt$$

avec $\Omega$ l'ensemble des commandes et $\tau$ l'ensemble des durées dans lesquels chaque élément respecte les conditions C1 à C4.

Ce problème d'optimisation est bien un problème à deux niveaux (« bi-level optimal problem » en anglais), c'est à dire que la contrainte du problème de niveau supérieur est elle-même la solution d'un problème d'optimisation. En l'occurrence, le problème d'optimisation de niveau inférieur peut se formuler comme un problème quadratique.

La résolution de ce problème d'optimisation à deux niveaux, la recherche de la trajectoire de centre de masse c solution du problème de niveau inférieur dont la consigne de vitesse de déplacement Vd est la plus proche de la vitesse estimée Ve et la détermination, au cours de l'itération de la pluralité d'itérations mises en œuvre au cours du pas, de la consigne de vitesse de déplacement Vd est réalisée par dichotomie.

La dichotomie est effectuée sur un intervalle initial entre la vitesse déterminée à l'itération précédente, pour laquelle l'existence d'une trajectoire de centre de masse c respectant C1 à C4 est garantie par récurrence, et la vitesse estimée Ve, pour laquelle une telle existence de trajectoire n'est pas garantie. Il existe donc toujours au moins une trajectoire dans cet intervalle initial correspondant à la trajectoire de l'itération précédente.

L'intervalle initial est récursivement remplacé par plusieurs intervalles réduits sur une pluralité d'itérations de la façon suivante :

- une moyenne est déterminée entre une valeur minimale et une valeur maximale d'un intervalle réduit ;
- une trajectoire du centre de masse c et du centre de pression p de l'exosquelette 1 sont recherchées, la trajectoire étant parcourue à une consigne de vitesse de déplacement égale à la moyenne ; et
- l'intervalle réduit est remplacé par un premier sous-intervalle compris entre la borne de l'intervalle réduit la plus proche de la vitesse estimée Ve et la moyenne, si la trajectoire respecte les conditions C1 à C4, sinon l'intervalle réduit est remplacé par un deuxième sous-intervalle compris entre la moyenne et la borne de l'intervalle réduit la plus éloignée de la vitesse estimée Ve.

Puis les étapes sont répétées sur l'intervalle réduit correspondant au premier sous-intervalle ou au second sous-intervalle jusqu'à que la longueur de l'intervalle réduit soit suffisamment petite pour obtenir une estimation acceptable de la vitesse optimale.

Par conséquent, cette méthode de résolution fournit, en même temps, la vitesse optimale (selon le critère de distance avec la vitesse estimée Ve) et une trajectoire de centre de masse respectant C1 à C4 à cette vitesse optimale.

Cette méthode de recherche divise l'intervalle de recherche par 2 à chaque itération de la dichotomie, garantissant une complexité algorithmique en $2^N$ pour l'objectif haut niveau, et donc la rapidité de la méthode. Le Demandeur constate une précision suffisante pour l'application en utilisant N=12.

Si la vitesse de déplacement optimale trouvée Vd est égale à la vitesse estimée Ve, alors l'écart à minimiser est nul et le problème d'optimisation est résolu dès la première itération de la dichotomie.

Sinon, la dichotomie est poursuivie jusqu'à N=12 ou jusqu'à la réduction de la longueur de l'intervalle en dessous d'un seuil D (typiquement de l'ordre de 1e-3 à 1e-6).

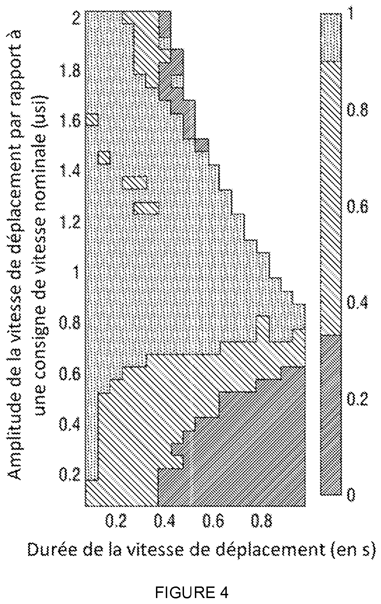

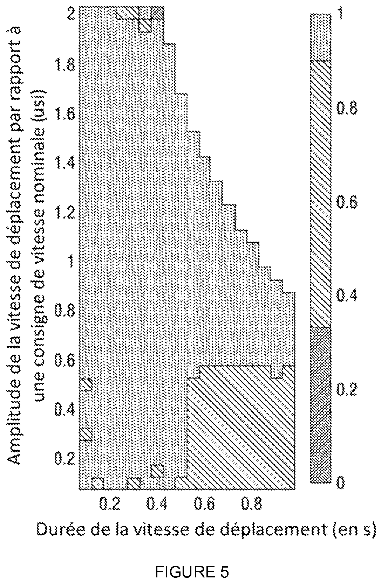

Un tel mode de mise en œuvre permet de maintenir l'équilibre de l'exosquelette pour une plus grande gamme de vitesses. En effet, en comparaison avec la figure 4, la figure 5 montre que le procédé offre une stabilité de l'exosquelette satisfaisante (au-dessus de 0,5) pour une plus grande gamme de vitesses de déplacement de la jambe de vol 30.

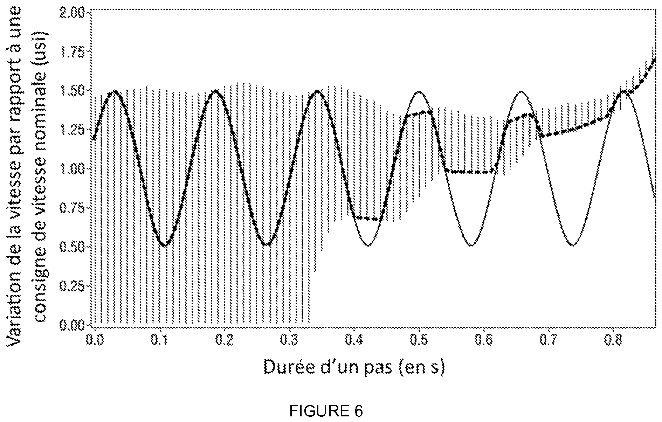

En particulier, afin de garantir l'équilibre de l'exosquelette, le procédé a pour effet de contraindre de plus en plus la vitesse demandée par le patient à mesure que la jambe de vol 30 se rapproche du deuxième point d'appui. En effet, dans le cas où un opérateur ferait accélérer et décélérer la jambe de vol 30 de façon périodique tout au long du pas comme illustré en figure 6, la mise en œuvre du procédé permet de réduire la gamme de vitesses de déplacement (voir la courbe en trait plein) afin de prioriser l'équilibre de l'exosquelette 1 en dépit des mouvements de l'opérateur 2 (voir la courbe en pointillés) lorsque la jambe de vol 30 se rapproche du deuxième point de contact correspondant à la fin du pas.

L'opérateur peut donc réaliser des mouvements incertains sans risquer de tomber. Ainsi, la rééducation sans maintien de l'exosquelette 1 par le physiothérapeute peut se faire au plus tôt après un accident permettant à l'opérateur 2 de récupérer l'usage de ses membres plus rapidement.

Selon un autre mode de mise en œuvre, l'ensemble des trajectoires garantissant l'équilibre peut être générée « hors-ligne » par recherche exhaustive des solutions d'un problème d'optimisation (par exemple, le problème d'optimisation présenté précédemment), c'est-à-dire avant la mise en mouvement de l'exosquelette par le patient, pour un ensemble suffisamment grand de vitesses estimées Ve possibles , ainsi que d'une pluralité de paramètres, et cet ensemble peut être enregistré dans la mémoire de l'exosquelette, possiblement compressé par un modèle d'apprentissage, par exemple un réseau de neurones. Cet ensemble peut être ensuite évalué « en-ligne », donc à chaque itération de la pluralité d'itérations mises en œuvre au cours du pas, pour trouver la trajectoire de centre de masse c, possiblement d'autres quantités auxiliaires qui respectent les contraintes C1 à C4 ainsi que possiblement d'autres contraintes, et qui minimise l'écart entre la consigne de vitesse de déplacement Vd et la vitesse estimée Ve, et possiblement d'autres critères.

Le réseau de neurones peut par exemple de type « à propagation avant » (FNN, « Feedforward Neural Network » selon la terminologie anglosaxonne).

La pluralité de paramètres utiles à l'évaluation d'un tel ensemble de trajectoires pré-calculées comprennent la vitesse estimée Ve, une variable de phase, c'est-à-dire une variable permettant d'estimer « l'avancement » de la jambe de vol 30 au cours du pas, une position courante du centre de masse autour de laquelle est asservi le centre de masse c de l'exosquelette 1, et l'état final du centre de masse obtenu à l'étape E0.

Cet ensemble de trajectoires, compressé par apprentissage ou non, est chargé par l'unité de commande 11 depuis son espace de stockage interne ou en se connectant au serveur 15 par le réseau 20.

L'unité de commande 11 peut donc ensuite utiliser le réseau de neurones sur chaque itération de la pluralité d'itérations au cours du pas pour déterminer une trajectoire garantissant l'équilibre de l'exosquelette 1 en fonction de la vitesse estimée Ve.

Ainsi, une consigne de vitesse de déplacement Vd au plus proche de la vitesse estimée Ve est calculée en fonction de la trajectoire générée par le réseau de neurones.

Au cours d'une étape E3, l'unité de commande 11 détermine, à partir de la consigne de vitesse de déplacement Vd, une première commande à appliquer à la jambe de vol 30 pendant le pas. La première commande a pour conséquence de modifier la vitesse de la jambe de vol 30 et donc le mouvement imposé initialement par l'utilisateur si la consigne de vitesse de déplacement est différente de la vitesse estimée.

Au cours d'une étape E4, l'unité de commande 11 détermine, à partir de la trajectoire déterminée, une deuxième commande à appliquer à la jambe d'appui 31.

La deuxième commande à appliquer à la jambe d'appui 31 a pour effet de déplacer le centre de pression p afin d'imposer au centre de masse c la trajectoire souhaitée et ainsi de garantir la stabilité. La détermination de la deuxième commande à appliquer à la jambe d'appui 31 peut être une commande en admittance comprenant :

- une mesure de la position du centre de masse de l'exosquelette 1 et un calcul d'un écart par comparaison de la position mesurée avec la trajectoire ; et
- à partir de l'écart calculé, une génération d'une consigne de position et d'une consigne de vitesse d'une ou plusieurs articulations de la jambe d'appui 31.

La commande en admittance est décrite de façon détaillée dans la demande de brevet FR 3 117 393 A1.

La génération de la consigne de position et de la consigne de vitesse de l'une ou chaque articulation de la jambe de vol 31 comprend la résolution d'un problème d'optimisation hiérarchique ayant pour objectif de priorité maximale le respect de la position et de la vitesse de la jambe de vol 30.

La résolution d'un problème d'optimisation hiérarchique consiste à déterminer la consigne de position et la consigne de vitesse de l'une ou chaque articulation de la jambe d'appui 31 satisfaisant une liste d'objectifs hiérarchisée par ordre de priorités, le premier objectif de la liste correspondant ici à l'objectif de priorité maximale.

Un exemple de liste d'objectifs hiérarchisés peut être le suivant :

- niveau 1, suivre la position et la consigne de vitesse de déplacement Vd de la jambe de vol 30 ;
- niveau 2, suivre l'accélération du centre de masse c de l'exosquelette 1 telle que décrite dans la demande de brevet FR 3 117 393 A1 ;
- niveau 3, suivre les mouvements de roulis et de tangage du bassin ; et
- niveau 4, suivre une configuration articulaire de l'exosquelette 1 debout et à l'arrêt lors du pas.

Ainsi, l'opérateur 2 peut effectuer avec la jambe de vol 30 un mouvement rapide ou éloigné d'une direction de marche, par exemple un mouvement latéral, sans risquer de mettre en péril la stabilité du centre de masse.

Au cours d'une étape E5, l'unité de commande 11 actionne la jambe de vol 30 selon la première commande et actionne la jambe d'appui 31 selon la deuxième commande.

Chaque itération de la pluralité d'itérations est répétée à une fréquence d'au moins 250 Hz, de préférence d'au moins 500 Hertz, par exemple 1 kHz.

Le procédé décrit précédemment peut être répété de sorte que la pluralité d'itérations soit répétée de sorte à déplacer l'exosquelette 1 d'une position initiale à une position finale par une succession de pas.

*Moyen de stockage et produit programme d'ordinateur*

On prévoit aussi selon l'invention un produit programme d'ordinateur comprenant des instructions qui, lorsque le programme est exécuté sur l'unité de commande d'un exosquelette bipède tel que précédemment décrit, conduisent cet exosquelette à mettre en œuvre le procédé selon l'invention.

On prévoit en outre selon l'invention un moyen de stockage lisible par un ordinateur, sur lequel est enregistré le produit programme d'ordinateur.

**Revendications**

1. Procédé de mise en mouvement stabilisée d'un exosquelette (1) bipède recevant un opérateur (2) humain pour effectuer un pas au cours duquel une première jambe (30) de l'exosquelette (1) passe d'un premier point d'appui au sol à un deuxième point d'appui au sol, la première jambe (30) n'étant pas en contact avec le sol entre le premier point d'appui et le deuxième point d'appui, et au cours duquel une deuxième jambe (31) de l'exosquelette (1) reste en contact avec le sol pendant le pas,

   le procédé comprenant, à chaque itération d'une pluralité d'itérations mises en œuvre au cours du pas, la réalisation des étapes suivantes par une unité de commande (11) embarquée sur l'exosquelette (1) :

   - estimation (E1) d'une vitesse (Ve) de la première jambe (30) par un capteur de mouvement (12) relié à l'unité de commande (11) ;
   - à partir de la vitesse estimée (Ve), détermination (E2) d'une consigne de vitesse de déplacement (Vd) et d'une trajectoire du centre de masse (c) de l'exosquelette (1),

   la consigne de vitesse de déplacement (Vd) et la trajectoire du centre de masse (c) de l'exosquelette (1) provenant d'une résolution d'un problème d'optimisation ayant pour objectif la minimisation d'un écart entre la consigne de vitesse de déplacement (Vd) et la vitesse estimée (Ve) et pour contrainte que la trajectoire garantisse l'équilibre de l'exosquelette (1) jusqu'à ce que la première jambe (30) atteigne le deuxième point d'appui au sol avec pour vitesse la consigne de vitesse de déplacement (Vd) ;

   - à partir de la consigne de vitesse de déplacement (Vd), détermination (E3) d'une première commande à appliquer à la première jambe (30) pendant le pas ;
   - à partir de la trajectoire déterminée, détermination (E4) d'une deuxième commande à appliquer à la deuxième jambe (31) ; et
   - actionnement (E5) de la première jambe (30) selon la première commande et actionnement de la deuxième jambe (31) selon la deuxième commande.

2. Procédé selon la revendication 1, comprenant la répétition de la pluralité d'itérations de sorte à déplacer l'exosquelette (1) d'une position initiale à une position finale par une succession de pas.

3. Procédé selon la revendication 2, dans lequel la détermination, au cours d'une itération, de la consigne de vitesse de déplacement (Vd) est réalisée par dichotomie sur un intervalle compris entre la vitesse estimée (Ve) et la consigne de vitesse de déplacement déterminée au cours de l'itération précédente.

4. Procédé selon l'une des revendications 1 à 3, dans lequel la détermination de la deuxième commande comprend :

   - une mesure de la position du centre de masse de l'exosquelette (1) et calcul d'un écart par comparaison de la position mesurée avec la trajectoire ; et
   - à partir de l'écart calculé, une génération d'une consigne de position et d'une consigne de vitesse d'une ou plusieurs articulations de la deuxième jambe (31).

5. Procédé selon la revendication 4, dans lequel la génération de la consigne de position et de la consigne de vitesse de l'une ou chaque articulation de la deuxième jambe (31) comprend la résolution d'un problème d'optimisation hiérarchique ayant pour objectif de priorité maximale le respect de la position et de la vitesse de la première jambe (30).

6. Procédé selon l'une des revendications 1 à 5, dans lequel chaque itération de la pluralité d'itérations est répétée à une fréquence d'au moins 250 Hz, de préférence d'au moins 500 Hertz.

7. Exosquelette (1) bipède comprenant une unité de commande (11), un capteur de mouvement (12) et des actionneurs, configurés pour mettre en œuvre un procédé selon l'une des revendications 1 à 6.

8. Produit programme d'ordinateur comprenant des instructions qui, lorsque le programme est exécuté sur une unité de commande d'un exosquelette bipède selon la revendication 7, conduisent cet exosquelette à mettre en œuvre le procédé selon l'une de revendications 1 à 6.

9. Moyen de stockage lisible par un ordinateur, sur lequel est enregistré le produit programme d'ordinateur selon la revendication précédente.

**Patentansprüche**

1. Verfahren zum stabilisierten Bewegen eines zweibeinigen Exoskeletts (1), das einen menschlichen Bediener (2) aufnimmt, um einen Schritt auszuführen, bei dem ein erstes Bein (30) des Exoskeletts (1) von einem ersten Abstützpunkt auf dem Boden zu einem zweiten Abstützpunkt auf dem Boden geführt wird, wobei das erste Bein (30) zwischen dem ersten Abstützpunkt und dem zweiten Abstützpunkt keinen Bodenkontakt hat und währenddessen ein zweites Bein (31) des Exoskeletts (1) während des Schrittes Bodenkontakt behält,

   wobei das Verfahren bei jeder Iteration einer Vielzahl von Iterationen, die während des Schrittes durchgeführt werden, die Durchführung der folgenden Schritte durch eine im Exoskelett (1) integrierte Steuereinheit (11) umfasst:

      - Schätzen (E1) einer Geschwindigkeit (Ve) des ersten Beins (30) durch einen mit der Steuereinheit (11) verbundenen Bewegungssensor (12);
      - Bestimmen (E2), anhand der geschätzten Geschwindigkeit (Ve), eines Sollwerts der Bewegungsgeschwindigkeits (Vd) und einer Bahn des Massenschwerpunkts (c) des Exoskeletts (1),

   wobei der Sollwert der Bewegungsgeschwindigkeit (Vd) und die Bahn des Massenschwerpunkts (c) des Exoskeletts (1) aus der Lösung eines Optimierungsproblems resultieren, dessen Ziel die Minimierung einer Abweichung zwischen dem Sollwert der Bewegungsgeschwindigkeit (Vd) und der geschätzten Geschwindigkeit (Ve) ist und mit der Einschränkung, dass die Bahn das Gleichgewicht des Exoskeletts (1) gewährleistet, bis das erste Bein (30) den zweiten Abstützpunkt auf dem Boden mit dem Sollwert der Bewegungsgeschwindigkeit (Vd) als Geschwindigkeit erreicht;

      - Bestimmen (E3), anhand des Sollwerts der Bewegungsgeschwindigkeit (Vd), eines ersten Befehls, der während des Schrittes auf das erste Bein (30) anzuwenden ist;
      - Bestimmen (E4), anhand der bestimmten Bahn, eines zweiten Befehls, der auf das zweite Bein (31) anzuwenden ist; und
      - Betätigen (E5) des ersten Beins (30) gemäß dem ersten Befehl und Betätigen des zweiten Beins (31) gemäß dem zweiten Befehl.

2. Verfahren nach Anspruch 1, umfassend die Wiederholung der Vielzahl von Iterationen, um das Exoskelett (1) durch eine Abfolge von Schritten von einer Ausgangsposition in eine Endposition zu bewegen.

3. Verfahren nach Anspruch 2, wobei die Bestimmung des Sollwerts der Bewegungsgeschwindigkeit (Vd) durch Dichotomie über ein Intervall durchgeführt wird, das zwischen der geschätzten Geschwindigkeit (Ve) und dem während der vorherigen Iteration bestimmten Sollwert der Bewegungsgeschwindigkeit liegt.

4. Verfahren nach einem der Ansprüche 1 bis 3, wobei die Bestimmung des zweiten Befehls umfasst:

   - eine Messung der Position des Massenschwerpunkts des Exoskeletts (1) und die Berechnung einer Abweichung durch Vergleich der gemessenen Position mit der Bahn; und
   - eine Erzeugung, anhand der berechneten Abweichung, eines Positionssollwerts und eines Geschwindigkeitssollwerts eines oder mehrerer Gelenke des zweiten Beins (31).

5. Verfahren nach Anspruch 4, wobei die Erzeugung des Positionssollwerts und des Geschwindigkeitssollwerts eines oder jedes Gelenks des zweiten Beins (31) die Lösung eines hierarchischen Optimierungsproblems umfasst, dessen maximales Prioritätsziel die Einhaltung der Position und der Geschwindigkeit des ersten Beins (30) ist.

6. Verfahren nach einem der Ansprüche 1 bis 5, wobei jede Iteration der Vielzahl von Iterationen mit einer Frequenz von mindestens 250 Hz, vorzugsweise mindestens 500 Hertz, wiederholt wird.

7. Zweibeiniges Exoskelett (1), das eine Steuereinheit (11), einen Bewegungssensor (12) und Aktuatoren umfasst, die ausgelegt sind, um ein Verfahren nach einem der Ansprüche 1 bis 6 auszuführen.

8. Computerprogrammprodukt, das Anweisungen umfasst, die, wenn das Programm auf einer Steuereinheit eines zweibeinigen Exoskeletts nach Anspruch 7 ausgeführt wird, dieses Exoskelett veranlassen, das Verfahren nach einem der Ansprüche 1 bis 6 auszuführen.

9. Computerlesbares Speichermedium, auf dem das Computerprogrammprodukt nach vorhergehendem Anspruch gespeichert ist.

## Claims

1. A method for stabilized movement of a bipedal exoskeleton (1) receiving a human operator (2) to take a step during which a first leg (30) of the exoskeleton (1) passes from a first point of support on the ground to a second point of support on the ground, the first leg (30) not being in contact with the ground between the first point of support and the second point of support, and during which a second leg (31) of the exoskeleton (1) remains in contact with the ground during the step;

   the method comprising at each iteration of a plurality of iterations implemented while taking the step, the performance of the following stages by a control unit (11) on-board the exoskeleton (1):

   - estimation (E1) of a speed (Ve) of the first leg (30) by a motion sensor (12) connected to the control unit (11);
   - from the estimated speed (Ve), determination (E2) of a movement speed setpoint (Vd) and a trajectory of the center of mass (c) of the exoskeleton (1);

   the movement speed setpoint (Vd) and the trajectory of the center of mass (c) of the exoskeleton (1) resulting from a resolution of an optimization problem having as objective that a difference between the movement speed setpoint (Vd) and the estimated speed (Ve) is minimized and as constraint that the trajectory guarantees the equilibrium of the exoskeleton (1) until the first leg (30) reaches the second support point on the ground with the speed of the movement speed setpoint (Vd);

   - from the movement speed setpoint (Vd), determination (E3) of a first command to be applied to the first leg (30) during the step;
   - from the determined trajectory, determination (E4) of a second command to be applied to the second leg (31); and
   - actuation (E5) of the first leg (30) according to the first command and actuation of the second leg (31) according to the second command.

2. The method according to claim 1, comprising the repetition of the plurality of iterations so as to move the exoskeleton (1) from an initial position to a final position by a succession of steps.

3. The method according to claim 2, wherein the determination, during an iteration, of the movement speed setpoint (Vd) is done by dichotomy over an interval comprised between the estimated speed (Ve) and the movement speed setpoint determined during the preceding iteration.

4. The method according to one of claims 1 to 3, wherein the determination of the second command comprises:

   - measuring the position of the center of mass of the exoskeleton (1) and calculating a deviation by comparison of the measured position with the trajectory; and
- from the calculated deviation, generating a position setpoint and a speed setpoint of one or more joints of the second leg (31).

5. The method according to claim 4, wherein the generation of the position setpoint and the speed setpoint of one or each joint of the second leg (31) comprises the resolution of a hierarchical optimization problem whose maximum priority objective is to respect the position and speed of the first leg (30).

6. The method according to any of claims 1 to 5, wherein each iteration of the plurality of iterations is repeated at a frequency of at least 250 Hz, preferably at least 500 Hz.

7. A bipedal exoskeleton (1) comprising a control unit (11), a motion sensor (12) and actuators, configured to perform a method according to one of claims 1 to 6.

8. A computer program product comprising instructions which, when the program is executed on a control unit of a bipedal exoskeleton according to claim 7, cause this exoskeleton to implement the method according to claims 1 to 6.

9. A computer-readable storage means on which the computer program product according to the preceding claim is stored.

FIGURE 1

FIGURE 2

E0

Détermination d'une première
trajectoire de la jambe de vol

E1

Estimation d'une vitesse de la jambe de
vol

E2

Détermination d'une consigne de
vitesse de déplacement et d'une
trajectoire du centre de masse de
l'exosquelette

E3

Détermination d'une première
commande à appliquer à la jambe de
vol

E4

Détermination d'une deuxième
commande à appliquer à la jambe
d'appui

E5

Actionnement de la jambe de vol et de
la jambe d'appui

FIGURE 3

FIGURE 4

FIGURE 5

FIGURE 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2022053761 A1
- CN 114700948 A
- FR 3113829 A1
- WO 2015140352 A1
- WO 2015140353 A2
- FR 3117393 A1

**Littérature non-brevet citée dans la description**

- **S. CARON** ; **A. KHEDDA**. Multi-contact Walking Pattern Generation based on Model Preview Control of 3D COM Accelerations. *Humanoids*, 2016, 550-557